# EUROPÄISCHE PATENTANMELDUNG

(11) **EP 1 254 925 A2**
(43) Veröffentlichungstag der Anmeldung: **06.11.2002**
(21) Anmeldenummer: 02014129.7
(22) Anmeldetag: 27.08.1998
(51) Int. Cl.: C08L 95/00, C10C 3/00, E04D 5/00, E01C 7/18

(54) **Bitumen, beispielsweise zur Herstellung von Strassenbelag, Dachbahn, Bitumen in Wasser-Emulsion zur Verfestigung einer Schotterfläche oder zur Ausbildung von Anstrichen und Verwendung von Fischer-Tropsch-Synthese gewonnenem Paraffin**

(30) Priorität: 29.08.1997 DE 19737755; 23.12.1997 DE 19757553; 12.06.1998 DE 19826144; 26.08.1998 DE 19838770
(62) Teilanmeldung aus: 98947463.0
(71) Anmelder: Schümann Sasol GmbH, 20457 Hamburg (DE)
(72) Erfinder: Hidebrand, Günter, 06729 Rehmsdorf (DE); Richter, Ferndinand, 22549 Hamburg (DE); Matthäi, Michael, 24558 Henstedt-Ulzburg (DE); Iversen, Bruno, 22607 Hamburg (DE); Damm, Klaus-Werner, 21244 Buchholz (DE)
(74) Vertreter: Müller, Enno, Dipl.-Ing.

(57) **Zusammenfassung**

Die Erfindung betrifft ein Bitumen, wie es bspw. zur Herstellung von Straßenbelag zur Anwendung kommt. Es ist darauf abgestellt, dass das Bitumen einen Anteil von durch eine Fischer-Tropsch-Synthese gewonnenem Paraffin (FT-Paraffin), bis hin zu 7,5 Massen-% aufweist. Darüber hinaus betrifft die Erfindung auch eine Bitumen in Wasser-Emulsion zur Verfestigung einer Schotterfläche oder zur Ausbildung von Anstrichen. Hier ist es wesentlich, dass dem Bitumen FT-Paraffin zugegeben ist. Darüber hinaus betrifft die Erfindung auch eine Dachbahn mit auf einem Trägermaterial aufgebrachtem Bitumen und gegebenenfalls Füllmaterial, wie feinerem Kies. Das Bitumen enthält einen Anteil an FT-Paraffin. Schließlich betrifft die Erfindung auch die Verwendung von FT-Paraffin zur Zugabe zu Bitumen, und zwar in einem Anteil von bis zu 7,5 Massen-%.

## Beschreibung

Die Erfindung betrifft zunächst Bitumen, bspw. zur Herstellung von Straßenbelag.

Straßenbelag wird in sehr großem Umfang als Asphalt oder einem Gemenge von Bitumen mit Zuschlagstoffen, wie Sand, Kies, Splitt (rund oder gebrochen) oder dergleichen hergestellt.

Bei einem Straßenbelag wird angestrebt, daß ein hoher Verschleißwiderstand gegeben ist. Weiter soll eine Verformungsneigung gering sein, damit möglichst keine, geringe bzw. erst nach langer Benutzungsdauer Unebenheiten, wie Spurrillen oder dergleichen auftreten.

Die Erfindung beschäftigt sich mit der technischen Problematik, ein verbessertes Bitumen, bspw. zur Herstellung von Straßenbelag, anzugeben.

Diese technische Problematik ist zunächst und im Wesentlichen beim Gegenstand des Anspruches 1 gelöst, wobei darauf abgestellt ist, dass das Bitumen einen Anteil von durch eine Fischer-Tropsch-Synthese gewonnenem Paraffin (FT-Paraffin) enthält, wobei der Anteil bis 7,5 Massen-% beträgt. FT-Paraffine bestehen vornehmlich nur aus Normal-Paraffinen. Mehr als 90% sind gewöhnlich N-Alkane. Der Rest sind ISO-Alkane. Die Kettenlänge liegt bei C 30 bis etwa C 100 oder sogar C 105, bei einer Gradation (Erstarrungspunkt, EP) von ca. 68 bis ca. 105°C. Der Anteil von FT-Paraffin beträgt, bezogen auf einen Bitumenanteil des Asphalts oder bezogen auf Bitumen als solches, vorzugsweise 0,5% oder mehr. Diese Prozentangaben werden in der Praxis auf die Masse bezogen. Man kann aber auch von Volumenprozent ausgehen.

Überraschend hat sich herausgestellt, dass ein Straßenbelag, der mit solcherart modifiziertem Bitumen oder Asphalt hergestellt wird, wesentlich standfester ist. Die Ausbildung von Spurrillen bei den üblichen, im Straßenverkehr durch Kraftfahrzeuge gegebenen Belastungen ist gegenüber herkömmlichen Straßenbelägen auf Bitumen- oder Asphalt-Basis deutlich reduziert. Die Festigkeit eines Straßenbelages ist von verschiedenen, ineinandergreifenden Faktoren abhängig. Unter anderem insbesondere von dem Verdichtungsgrad. Hier hat sich überraschend herausgestellt, daß die Zugabe von FT-Paraffin eine deutlich höhere Verdichtung ermöglicht. Obwohl die FT-Paraffine letztlich zu einer härteren Ausbildung des Straßenbelages führen, setzen sie im flüssigen Zustand zugleich die Viskosität des "Bindematerials", also des Bitumens, herab. Sie wirken gleichsam als "Verflüssiger". Weiter kommt dem verwendeten Splitt, rund oder gebrochen, eine Bedeutung hinsichtlich der Festigkeit der Straßendecke zu. Bei gebrochenem Splitt lassen sich - was auf die Verzahnung der einzelnen Splittkörner zurückgeführt wird - hohe Festigkeiten erreichen. Bei nicht gebrochenem, rundem Splitt oder Kies läßt sich jedoch eine bessere Verdichtung erreichen. Auch in diesem Zusammenhang hat der Zusatz von FT-Paraffinen vorteilhafte Auswirkungen. Das Haftvermögen von Bitumen an dem Gestein, wie eben Splitt oder Kies, wird verbessert. Eine besonders deutliche Verbesserung kann man erreichen, wenn man - zumindest teilweise - oxydierte FT-Paraffine einsetzt. Der Erstarrungspunkt fällt hierbei zwar um ca. 5° im Vergleich zu nicht oxydierten FT-Paraffinen; jedoch wird das genannte Haftvermögen deutlich verbessert, so daß der Einsatz von rundem Kies oder Splitt, zumindest zu einem gewissen Anteil, ermöglicht ist, ohne daß Einbußen an der Festigkeit hingenommen werden müssen. Die vorteilhafte Wirkung von oxydierten FT-Paraffinen wird auf die hierbei gegebenen funktionellen Gruppen (Polarität) zurückgeführt.

Im praktischen Einsatzfall beträgt der Anteil an FT-Paraffinen im Bereichen von 0,5 bis 10, bevorzugt im Bereich von 2,5 bis 7,5, und weiter bevorzugt etwa 4 bis 5 Massen-Prozent, bezogen auf das Bitumen. Hinsichtlich der FT-Paraffine ist ein bevorzugter Einsatzbereich bei solchen eines Erstarrungspunktes von 90 bis etwa 105°C.

Während normaler Asphalt, in einer Ausführung als Walzasphalt, etwa 3-8% Bitumen enthält, wird auch sogenannter Guß-Asphalt hergestellt, der ca. 6,5 bis 8,5% Bitumen enthält. Es werden hier üblicherweise Bitumenqualitäten von B45 oder höher eingesetzt. Um beim Transport von Gußasphalt ein Absetzen der mineralischen Bestandteile zu verhindern, ist es erforderlich, bis zur endgültigen Verarbeitung ein ständiges Umrühren durchzuführen. Um die Viskosität für ein solches Umrühren niedrig zu halten, wird der Gußasphalt relativ hoch temperiert, nämlich auf 200 bis 250°C. Die Zugabe von FT-Paraffinen, wie zuvor erläutert, in etwa gleichem Verhältnis zu dem Gußasphalt (bzw. dem Bitumen des Gußasphalts) führt nun überraschend dazu, daß die Temperatur, welche erforderlich ist, um die Mischung rührfähig zu halten, deutlich abgesenkt werden kann. Während bislang Temperaturen von mindestens 220 bis 250°C erforderlich waren, ist beim Zusatz der FT-Paraffine eine Reduzierung um 30°C möglich. Diese Herabsetzung der Temperaturen ist zugleich mit dem erheblichen Vorteil verbunden, daß eine Schadstoffabgabe verringert wird.

Bei Asphalt, wie Gußasphalt oder auch Walzasphalt, hat sich im übrigen herausgestellt, daß eine deutlich längere Zeit zur Be- bzw. Verarbeitung des Asphalts verbleibt. Überraschend hat sich gezeigt, daß die Verarbeitung von solchem Asphalt auch bei geringeren Temperaturen als bislang möglich war. Dieser Effekt wird neben der bereits beschriebenen Viskositätsminderung auch auf einen Latentwärme-Speichereffekt des Paraffins zurückgeführt. Bei der Phasenumwandlung des Paraffins erfolgt eine Wärmefreisetzung ohne Temperaturrückgang.

Gegenstand der Erfindung ist auch eine Bitumen-in-Wasser-Emulsion. Eine solche Emulsion ist bspw. zur Verfestigung von Feldwegen oder zur Verfestigung einer Schotterfläche vorteilhaft. Die Schotterfläche wird einem Bitumen in einer Wasser-Emulsion übergossen. Erfindungsgemäß Erfindungsgemäß wird in diesem Zusammenhang vorgeschlagen, dass dem Bitumen FT-Paraffin zugegeben wird. Es wird auf diese Weise ein besseres "Brechen" der Emulsion erreicht. Das Bitumen umschließt das Gestein besser und es kommt so zu einer qualitativ höherwertigen Bitumen-/Gesteinsschicht.

Die vorbeschriebene Bitumen-Emulsion kann auch zur Ausbildung von Anstrichen, etwa im Grundmauerbereich eines Gebäudes oder bei Brücken verwendet werden. Auch in diesem Zusammenhang ist die beschriebene Zugabe von FT-Paraffin vorteilhaft.

Bei einem Gußasphalt-Estrich, wie er im Bauwesen, derzeit vor allem im Industriebau, Verwendung findet, kann auch der Gußasphalt-Estrich mit FT-Paraffinen versetzt werden. Der Anteil von FT-Paraffin beträgt 0,5 bis 10 Massenprozent, bezogen auf das eingesetzte Bitumen.

Gegenstand der Erfindung ist im Weiteren auch eine Dachbahn (Dachpappe). Eine Dachbahn besteht gewöhnlich aus einem Trägermaterial, wie etwa einem Glasfaservlies und darauf aufgebrachtem Bitumen. Weiter wird auf eine Dachbahn ein Füllermaterial in Form von feinem Kies oder dergleichen aufgebracht. Erfindungsgemäß wird dem Bitumen der Dachbahn FT-Paraffin in einem Anteil von 0,5 bis 10 Massenprozent, bezogen auf das Bitumen zugegeben.

Gegenstand der Erfindung ist schließlich auch die Verwendung von durch eine Fischer-Tropsch-Synthese gewonnenem Paraffin zur Zugabe zu Bitumen in einem Anteil bis zu 7,5 Massen-%.

Insgesamt hat sich gezeigt, daß ein derartiges Bitumen einen höheren Erweichungspunkt aufweist, bei niedriger Penetration. Die Penetration ist sogar geringfügig niedriger als zu erwarten gewesen wäre. Der Erweichungspunkt steigt stärker als die Penetration abfällt. Eine Entmischung konnte nicht festgestellt werden. Das derartig modifizierte Bitumen ist vorteilhaft lagerstabil. Zugleich ergibt sich ein verbessertes Haftverhalten bei etwa gleichem Brechpunkt im Vergleich zu herkömmlichen Bitumen. Eine entsprechende Verbesserung ergibt sich dann, wie auch ausgeführt, in der mit solchen Bitumen geschaffenen Asphaltmischung. Das Tieftemperatur-Verhalten verschlechtert sich überraschenderweise nicht. Es wird vielmehr von dem verwendeten Grundbitumen bestimmt.

Es ist auch ein Verfahren zur Ausbildung einer Straßendecke bekannt mit Anteilen von Alt-Asphalt einer abgetragenen Straßendecke und Anteilen an Neu-Asphalt, wobei der Alt-Asphalt zunächst auf eine Temperatur erwärmt wird, die niedriger ist als die Temperatur des Neu-Asphalts und die Anteile von Alt-Asphalt und Neu-Asphalt sodann vermischt werden. Bei einem derartigen Verfahren kann dem Neu-Asphalt, oder gegebenenfalls dem Alt-Asphalt, FT-Paraffin zugegeben werden. Überraschenderweise läßt sich hiermit ein besserer Aufschluß des Alt-Asphalts erreichen. Der Alt-Asphalt wird nur so weit erwärmt, daß keine Verflüssigung eintritt. Die Verflüssigung und Vermischung mit dem Neu-Asphalt tritt vielmehr erst aufgrund der Zugabe des Neu-Asphalts und der
wesentlich höheren Temperatur des Neu-Asphalts ein. Dadurch, daß dem Neu-Asphalt FT-Paraffin zugegeben wird, verflüssigt sich der Neu-Asphalt stärker und es kommt so zu einer innigeren Vermischung und damit schnelleren temperaturmäßigen Aufschließung des Alt -Asphalts. Die FT-Paraffine werden in diesem Zusammenhang bevorzugt in einem Anteil von 0,1 bis 0,5%, bei einem durchgeführten Beispielsfall etwa mit 0,25%, jeweils geeigneterweise Massenprozent, bezogen auf eine Einsatzmenge des Neu-Asphalts, beigegeben.

### Beispiele:

### Beispiel 1

Es wurde Straßenbaubitumen B 100 mit 2,5, 5 und 7,5 Vol.-% FT-Paraffinen hergestellt. Die FT-Paraffine wurden mit einem Flügelrührwerk bei 160°C in das Bitumen eingerührt.

| Hierbei ergaben nich folgende Werte: | | | | | |
|---|---|---|---|---|---|
| | Einheiten | B100 | B100+2,5% FT-Paraffin | B100+5,0% FT-Paraffin | B100+7,9% FT-Paraffin |
| Erweichungspunkt | °C Bandflüssig- Keit | 44,5 Wasser | 75,5 Wasser | 94,5 Glyzerin | 101,0 Glyzerin |
| Penetration bei 25° C | mm/10 | 89 | 57 | 44 | 41 |
| Brechpunkt n. Praass | °C | -14,5 | -13,0 | 12,0 | -10,0 |
| Thermische Stabilität | °C | 0,5 | 1,5 | 1,5 | 1,0 |

| Haftverhalten (ÖNORM B3682) + 40°C Wasserlagerung, Bedeckung der Oberfläche | | | | | |
|---|---|---|---|---|---|
| dolomitscher Kalk | | | | | |
| 24 Stunden | % | 100 | 100 | 100 | 100 |
| 48 Stunden | % | 100 | 100 | 100 | 100 |
| Dolomit 24 Stunden | % | 95 | 100 | 100 | 100 |
| 48 Stunden | % | 95 | 100 | 100 | 100 |
| Granulit 24 Stunden | % | 100 | 100 | 100 | 100 |
| 48 Stunden | % | 95 | 100 | 100 | 100 |
| Granit 24 Stunden | % | 90 | 100 | 100 | 100 |
| 48 Stunden | % | 85 | 100 | 100 | 100 |
| Masseänderung nach RTFOT (ASTM D2872-88) | % | <0,1 | <0,1 | <0,1 | <0,1 |
| Erweichungspunkt nach Ring und Kugal nach RTFOT | °C Badflüssigkeit | 43,5 Wasser | 73,0 Wasser | 97,5 Glyzerin | 102,0 Glyzerin |
| Verminderung des ERK | % | 2.2 | 3,3 | - | - |
| Erböhung des ERK | % | - | | 3,2 | 1,0 |
| Penetration bei 25 °Cnach RTFOT | mm/10 | 62 | 37 | 28 | 26 |
| Verminderung der Penetration | % | 30.3 | 35,1 | 36,4 | 36,6 |

### Hierzu sei Folgendes erläutert:

Der Erweichungspunkt wurde mit Ring und Kugel gemäß der österreichischen Norm (ÖNORM) C 9212 ermittelt. Die Penetration wurde gemäß ÖNORM C9214 bestimmt. Der Brechpunkt nach Fraass wurde gemaß ÖNORM C 9213 ermittelt. Die Thermische Stabilität (Tubentest) wurde gemäß TL-Pmb, Teil 1 (1991) bei + 180°C und 72 Stunden geprüft. Das Haftverhalten wurde gemäß ÖNORM B 3682 an folgenden Gesteinen geprüft:

EBK 8/11 dolomitischer Kalk (Bad Deutsch Altenburg); EBK 8/11 Dolomit (Gaaden); EBK 8/11 Granulit (Meiding); EBK 8/11 Granit (Niederschrems).

Die Erhitzungsprüfung "Rolling Thin Film Oven Test" wurde gemäß ASTM D 2872-88 bei 163°C durchgeführt und die Massenänderung, die Veränderung des Erweichungspunktes mit Ring und Kugel und der Penetration bei 25°C bestimmt.

Die Ergebnisse zeigen, daß die Zugabe von FT-Paraffin zu einer Erhöhung des Erweichungspunktes und einer Erniedrigung der Penetration führt. Das Haftverhalten wird durch die Zugabe von FT-Paraffin in Bezug auf Zuschlagstoffe unterschiedlicher Körnung (0-32), wie Granit, Granulit oder dolomitischem Kalk verbessert.

Bei dem zugegebenen FT-Paraffin handelte es sich um FT-Paraffin mit einer aus der Fischer-Tropsch-Synthese gewonnen üblichen Kettenlängenverteilung mit einem Maximum bei C40 bis etwa C60.

### Beispiel 2

Es wurde ein Straßenbelag, bestehend aus einer Deckschicht und einer Asphalt-Binderschicht hergestellt. Die Asphaltschicht enthielt 2-3% - bezogen auf das Bitumen - an FT-Paraffinen üblicher Kettenlänge, wie aus der Fischer-Tropsch-Synthese gewonnen.

Es zeigte sich eine deutliche Verlängerung der möglichen Verdichtungszeit der bituminösen Tragschicht von bisher üblichen 0,5 Stunden auf mehr als 2 Stunden aufgrund verbesserten Fließverhaltens durch den Zusatz an FT-Paraffinen. Die Verarbeitung war noch bei Außen-Temperaturen von weniger als 3°C möglich. Auch erhöhte sich der Verdichtungsgrad in der bituminösen Tragschicht wie auch in der Deckschicht. Bspw. sind bislang üblich Verdichtungsgrade von 97%. Es wurde hier ein Verdichtungsgrad von mehr als 100% erreicht. Es ergab sich eine wesentliche Erhöhung der Standfestigkeit bei einer erheblichen Reduzierung der Neigung zur Spurrillenbildung.

### Beispiel 3:

Es wurde Gußasphalt hergestellt mit einem Bitumenanteil von 7,5 %. Es wurden FT-Paraffine zu dem Bitumen - bezogen auf die Masse des Bitumens - in einem Anteil von 5 % hinzugegeben. Es ergab sich eine Absenkung der bislang üblichen Verarbeitungstemperatur (Rührtemperatur) von 250 auf 220°C. Trotz abgesenkter Verarbeitungstemperatur wurde aufgrund des Zusatzes von FT-Paraffinen eine Verbesserung des Fließverhaltens erreicht, was zu einer längeren Verarbeitungsdauer des Gußasphalts führte. Es ließ sich auch eine deutliche Absenkung der Emissionswerte bei der Aufbringung des Gußasphalts aufgrund der Temperaturabsenkung feststellen. Insgesamt ergab sich bei der Verarbeitung eine größere Quadratmeterzahl pro Zeiteinheit, da größere Mengen an Asphalt verarbeitet werden konnten, ohne eine Absenkung unter die minimal notwendige Verarbeitungstemperatur befürchten zu müssen.

### Beispiel 4:

Es wurde die Spurbildung an Splittmastixasphalt 0/11 S, B 65 gemessen. Die Bezeichnung "0/11" steht hierbei für eine Gesteinskörnung von 0 bis 11 mm. Hierbei wurden die in nachstehender Tabelle aufgeführten Ergebnisse erzielt. Der FT-Paraffingehalt bezieht sich auf das eingesetzte Bitumen (Masse-%).

| FT-Paraffingehalt | Spurtiefe <mm> | 20.000 Überrollungen |
|---|---|---|
| % | 40°C | 50°C |
| 0 | 3,0 | 5,7 |
| 2 | 1,5 | 2,7 |
| 3 | 1,2 | 2,2 |

### Beispiel 5:

Es wurden Vergleichsversuche mit Bitumen B80 und 0, 1,5, 3,0 und 4,5 Masse-% bezogen auf das Originalbindemittel B80 vorgenommen. Hierbei wurden die in nachstehender Tabelle aufgeführten Ergebnisse erzielt.

| | | Antoil FT-Paraffin in M.-% | | | |
|---|---|---|---|---|---|
| Eindemittel | | B80 + 0 | B80 + 1,5 | B80 + 3.0 | B80+ 4,5 |
| Erweichungspunkt RuK | °C | 48 | 52 | 76 | 96 |
| Penetration | 1/10mm | 71 | 48 | 37 | 42 |
| Brechpunkt nach Fraäß | °C | -7,5 | -7,5 | -6,5 | -7,5 |
| Aschegehalt | % | 0,18 | 0,16 | 0,15 | 0,19 |
| Duktilität, 25°C | cm | >100 | >100 | 95 | >100 |
| Dichte, 25°C | g/cm³ | 1,0228 | 1,0233 | 1,214 | 1,216 |
| nach thermischer Bean spruchung im rotierenden Kolben. 165°C | | | | | |
| Gewichtsänderung | % | -0,05 | 0,05 | 0,1 | 0,2 |
| Erweichungspunkt RuK Anstieg | °C | 3,5 | 9,5 | 5,5 | 0,5 |
| Abfall Penetration | % | -25,4 | -24,6 | -16,2 | -21,4 |
| Duktilitär, 25°C | cm | >100 | >100 | 90 | >100 |
| Viskosität | 110°C | 3300 | 2119 | 1713 | 1593 |
| | 130°C | 750 | 600 | 50,4 | 480 |
| | 180°C | 95 | 72 | 74 | 64 |
| EVT | 100°C | 178°C | 170°C | 166°C | 165°C |

### Beispiel 6 :

Es wurden weitere Versuche mit B45, B65 und B80, jeweils mit 4 oder 6% FT-Paraffin, wiederum Masse-% bezogen auf das Ausgangsbindemittel durchgeführt. Zudem wurden zum Vergleich noch entsprechende Werte für ein polymerodifiziertes Bitumen (PmB45A) und ein Bitumen B45 mit 30 Masse-% Trinidad Epuré ermittelt. Die Ergebnisse sind in der nachstehenden Tabelle aufgeführt.

Grundsätzlich wurden hierbei folgende allgemeine Erkenntnisse gewonnen.

FT-Paraffin läßt sich in Bitumen bei Temperaturen von 150°C homogen einrühren. Der Übergang vom festen in den flüssigen Zustand, definiert über den Erweichungspunkt RuK wird durch das zugesetzte FT-Paraffin sehr stark angehoben. Liegen die Erweichungspunkte bei den Ausgangsbitumen im Bereich zwischen 50 und 60°C, so steigen sie durch Zusatz von 4 Gew.-% FT-Paraffin auf 85 bis 95°C. Im Vergleich dazu nimmt die Penetration nur in geringerem Umfange ab. Es kommt zu einer Viskositätserhöhung im Bereich von 2 Bindemittelstufen (B80 zu B45). Das Verhalten bei tiefen Temperaturen verändert sich bei der Prüfung des Brechpunktes nach Fraaß nur sehr geringfügig und verschiebt sich um maximal 1 Bindemittelstufe. Hieraus ergibt sich somit eine starke Erhöhung der Plastizitätsspanne. Weiterhin läßt sich feststellen, daß die Veränderungen um so deutlicher sind, je weicher das Ausgangsbindemittel gewählt wurde.

| | Erweichungspunkt RuK (°C) | Nadelpenetration [0,1mm] | Brechpunkt n. Fraaß [°C] | | Plastizitätsspanne . | |
|---|---|---|---|---|---|---|
| | | | | ΔT [°K] | Anstieg | |
| | | | | | ggü-Bit-o-FT-P- [%] | ggü-PmB45A[%] |
| B45 | 58,5 | 33 | -12 | 70,5 | - | - |
| B45+4% FT-P, | 87,5 | 25 | -10 | 97,5 | 38 | 37 |
| B45+6% FT-P, | 93,5 | 23 | -6 | 99,5 | 41 | 40 |
| B65 | 51,0 | 48 | -8 | 59 | - | - |
| B65+4% FT-P, | 91,0 | 25 | -9 | 100 | 69 | 41 |
| B65+6% FT-P, | 93,5 | 25 | -7 | 110,5 | 70 | 42 |
| B80 | 45,5 | 83 | -11 | 56,5 | - | - |
| B80+4% FT-P, | 83,5 | 50 | -11 | 94,5 | 67 | 33 |
| B80+6% TF-P | 92,0 | 45 | -8 | 100 | 77 | 41 |
| PmB45A | 58,0 | 38 | -13 | 71 | - | - |
| B45+ Trinidad | 66,0 | 21 | -8 | 74 | - | - |

Nachstehend ist die Erfindung hinsichtlich insbesondere der Herstellung eines Straßenbelages noch anhand beigefügter Zeichnung, die jedoch lediglich Ausführungsbeispiele darstellt, erläutert. Hierbei zeigt:
- Fig. 1: in schematischer Weise eine Schnittdarstellung durch einen Straßenbelag;
- Fig. 2: eine schematische Darstellung der Herstellung von Asphalt;
- Fig. 3: in schematischer Weise eine Schnittdarstellung durch einen weiteren Straßenbelag;
- Fig. 4: eine schematische Darstellung der Herstellung eines Straßenbelages mit einer Mischung aus Alt-Asphalt und Neu-Asphalt.

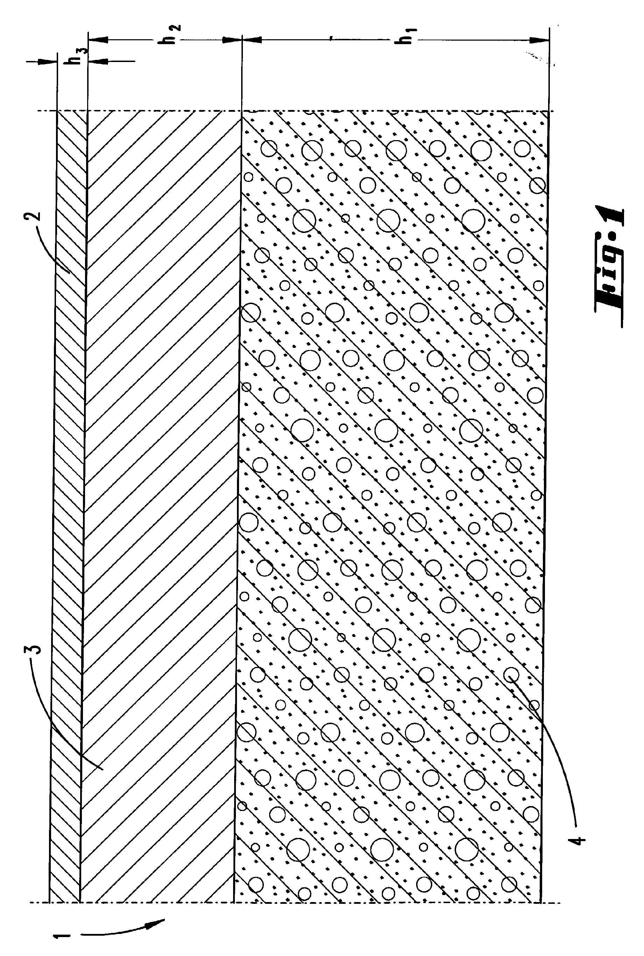

Mit Bezug zu Fig. 1 sei Folgendes erläutert.

Der Straßenbelag 1 besteht aus einer oberen Asphalt-Betonschicht, auch als Asphalt-Deckschicht 2 zu bezeichnen, einer mittleren bituminösen Tragschicht 3 und einer unteren Frostschutzschicht 4 . Die Frostschutzschicht 4 besteht aus einer Mischung aus Sand und Kies. Sie hat eine Höhe h1 von ca. 40 cm. Die darüber befindliche bituminöse Tragschicht 3 hat eine Höhe h2 von 6 bis 20 cm und die Asphalt-Deckschicht 2 eine solche Höhe h3 von etwa 2 bis 4 cm.

Die bituminöse Tragschicht 3 ist mit einem Bitumen hergestellt, das einen Anteil an FT-Paraffinen von ca. 5 Massen-Prozent aufweist. Das FT-Paraffin hat einen Schmelzpunkt von ca. 100°C und ist durch die Fischer-Tropsch-Synthese erhalten.

Die bituminöse Tragschicht 3 in der angegebenen Zusammensetzung weist eine wesentlich höhere Standfestigkeit auf. Da die Standfestigkeit der bituminösen Tragschicht für das Verformungsverhalten des Straßenbelags, insbesondere die Spurrillenbildung, verantwortlich ist, ist hierüber insgesamt eine wesentlich höhere Lebensdauer erzielt.

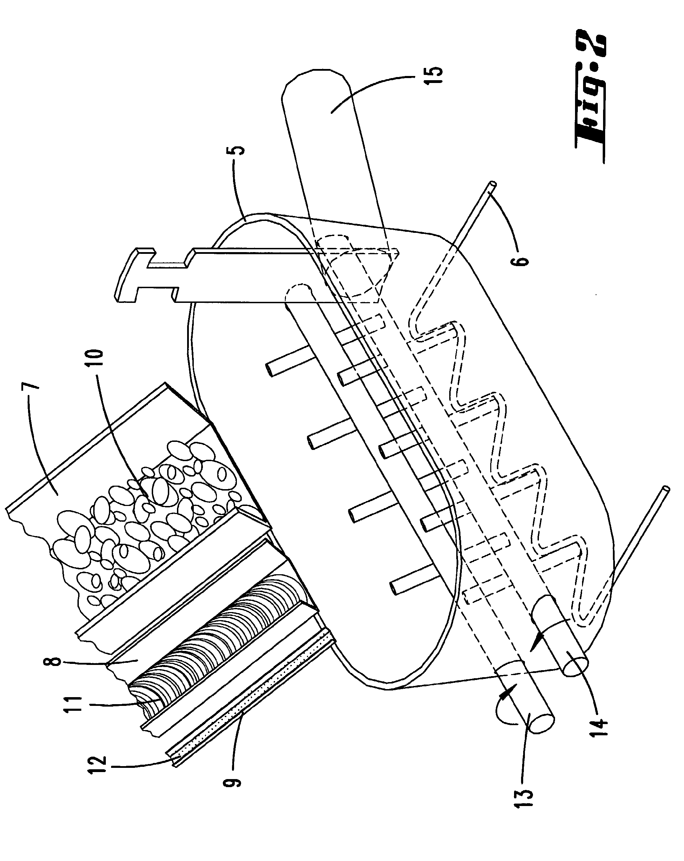

In Fig. 2 ist in schematischer Form ein Behältnis 5 zur Herstellung einer Mischung für eine bituminöse Tragschicht dargestellt. Das Behältnis 5 kann über eine Heizeinrichtung 6 erhitzt werden.

Über Schütten 7, 8 und 9 werden Zuschlagstoffe, wie Kiesel und Sand 10, oder sonstiges Gestein, unterschiedlicher Körnung, Bitumen 11 und FT-Paraffine 12 in das Behältnis 5 eingegeben. Diese Bestandteile werden, wie ebenfalls schematisch dargestellt, durch ein Rührwerk, bestehend aus zwei gegenläufig arbeitenden Wellen 13, 14 miteinander verrührt. Aus dem Behältnis kann die so zubereitete Masse über einen Abfluß 15 ausgelassen werden. Die Verrührung erfolgt bei einer Temperatur von etwa 160°C.

Die Mischung besteht zu etwa 95 % aus Gestein und 5 % aus Bitumen. Darüber hinaus noch 5 % FT-Paraffin, bezogen auf den 5-prozentigen Bitumen-Anteil.

Mitunter wird anstatt des Begriffs "FT-Paraffin" auch der Begriff "Hartwachs" oder "Hartparaffin" verwendet. Im Rahmen vorliegender Anmeldung wird auf durch die Fischer-Tropsch-Synthese gewonnenes Paraffin, was man mitunter auch als makrokristallines Paraffin bezeichnet, Bezug genommen. Es handelt sich vorzugsweise um langkettige Kohlenwasserstoffe mit Kettenlängen im Bereich von C30 bis C80, C90 oder C100.

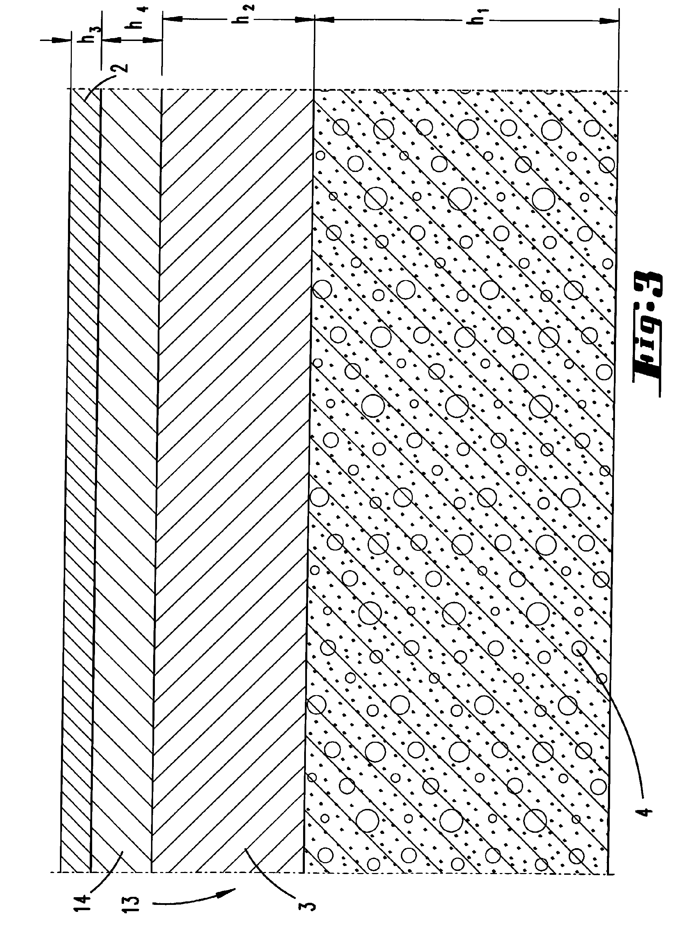

Mit Bezug zu Fig. 3 ist ein Straßenbelag 13 dargestellt, der aus einer Asphalt-Deckschicht 2, einer darunter befindlichen Asphalt-Binderschicht 14, einer bituminösen Tragschicht 3 und einer unteren Frostschutzschicht 4 besteht.

Während die Asphalt-Deckschicht 2, die bituminöse Tragschicht 3 und die Frostschutzschicht 4 einen Aufbau aufweisen, wie zuvor auch zu Fig. 1 erläutert, besitzt die Asphalt-Binderschicht 14 eine Höhe h4 von 4 bis 8 cm.

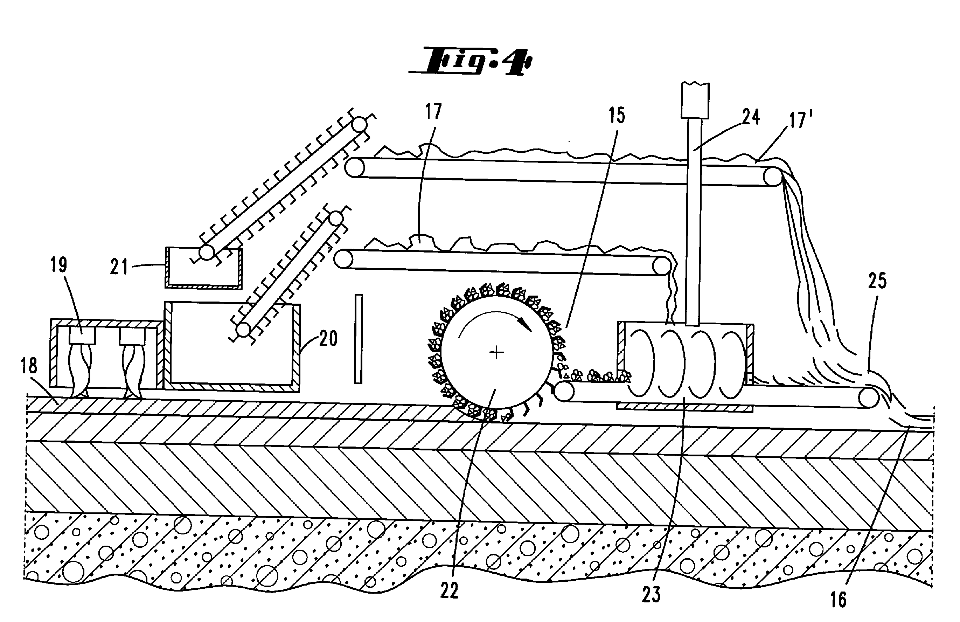

Mit Bezug zu Fig. 4 ist schematisch die Abtragung einer alten Straßenschicht, unter Gewinnung von Alt-Asphalt 15 und die Ausbildung eines neuen Straßenbelages 16 mit einem Anteil an Neu-Asphalt 17 und Alt-Asphalt 15 dargestellt.

Zunächst wird die alte Straßendecke 18 erwärmt, beim Ausführungsbeispiel durch Flammen von Brennern 19. Es sind weiter Behältnisse 20, 21 vorgesehen, mit welchen Neu-Asphalt hergestellt wird. Der Neu-Asphalt besitzt übliche Temperaturen im Bereich von 200 bis 250°. Die Erwärmung der alten Straßendecke 18 kann auch mit Abwärme aus der Erwärmung des Neu-Asphalts vorgenommen werden.

Weiter wird mit einer Fräse 22 die alte Straßendecke 18 abgetragen, unter Gewinnung von Brocken von Alt-Asphalt 15 . Der Alt-Asphalt 15 wird einer Mischanlage 23 zugeführt, in welche auch Neu-Asphalt 17 eingebracht wird. Darüber hinaus kann der Asphalt 17' auch im Anschluß an die Mischanlage 23 noch beigegeben werden.

Weiter wird FT-Paraffin zugegeben, entweder bereits dem Neu-Asphalt in einem Behältnis 20 oder über eine eigene Zugabevorrichtung 24, zur Zugabe in der Mischanlage 23 . Das schließlich gewonnene Asphalt 25 wird zur Ausbildung der neuen Straßendecke 16 auf den Untergrund aufgebracht.

Alle offenbarten Merkmale sind erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Bitumen, bspw. zur Herstellung von Straßenbelag, **gekennzeichnet durch** einen Anteil von **durch** eine Fischer-Tropsch-Synthese gewonnenem Paraffin (FT-Paraffin), wobei der Anteil bis zu 7,5 Massen-% beträgt.

2. Bitumen nach Anspruch 1, **dadurch gekennzeichnet, dass** das FT-Paraffin eine Schmelztemperatur (Erstarrungspunkt) von ca. 68-105°C aufweist.

3. Bitumen nach Anspruch 1 oder 2, **dadurch gekennzeichnet, dass** das FT-Paraffin zumindest teilweise aus oxidiertem FT-Paraffin besteht.

4. Bitumen in Wasser-Emulsion zur Verfestigung einer Schotterfläche oder zur Ausbildung von Anstrichen, **dadurch gekennzeichnet, dass** dem Bitumen FT-Paraffin zugegeben ist.

5. Dachbahn (oder Dachpappe) mit auf einem Trägermaterial aufgebrachtem Bitumen und gegebenenfalls Füllmaterial, wie feinerem Kies, **dadurch gekennzeichnet, dass** das Bitumen einen Anteil an FT-Paraffin enthält.

6. Verwendung von durch eine Fischer-Tropsch-Synthese gewonnenem Paraffin zur Zugabe zu Bitumen in einem Anteil von bis zu 7,5 Massen-%.
